# EUROPÄISCHE PATENTSCHRIFT

(11) **EP 1 436 160 B1**
(45) Veröffentlichungstag und Bekanntmachung des Hinweises auf die Patenterteilung: **30.03.2005**
(21) Anmeldenummer: 02769921.4
(22) Anmeldetag: 06.09.2002
(51) Int. Cl.: B60K 31/04, G05B 13/02, G05D 1/02

(54) **VERFAHREN UND VORRICHTUNG ZUR STEUERUNG DER GESCHWINDIGKEIT EINES FAHRZEUGS**
METHOD AND DEVICE FOR CONTROLLING THE SPEED OF A VEHICLE
PROCEDE ET DISPOSITIF POUR COMMANDER LA VITESSE D'UN VEHICULE

(30) Priorität: 11.10.2001 DE 10150421
(43) Veröffentlichungstag der Anmeldung: 14.07.2004
(73) Patentinhaber: ROBERT BOSCH GMBH, 70442 Stuttgart (DE)
(72) Erfinder: GUENTHNER, Jens, 74354 Besigheim (DE); SCHULTE, Hans, 71640 Ludwigsburg (DE); KNOBLOCH, Boris, 71706 Markgroeningen (DE); KUSTOSCH, Mario, 71665 Vaihingen/Enz (DE); MUEHLBAUER, Christian, 70771 Echterdingen (DE)
(86) Internationale Anmeldenummer: PCT/DE2002/003313
(87) Internationale Veröffentlichungsnummer: WO 2003/033289

(56) Entgegenhaltungen:
- EP-A- 0 290 715
- EP-A- 1 057 680
- DE-A- 19 806 116
- US-A- 4 337 511
- US-A- 4 725 969
- US-A- 4 747 051
- US-A- 4 835 696
- US-A- 4 884 203
- US-A- 4 905 153
- US-A- 5 749 063

## Beschreibung

### Stand der Technik

Die Erfindung betrifft ein Verfahren und eine Vorrichtung zur Steuerung der Geschwindigkeit eines Fahrzeugs.

Aus der DE-A 28 42 023 (US-Patent 4,337,511) ist ein Fahrgeschwindigkeitsregler bekannt, bei welchem die Fahrgeschwindigkeit des Fahrzeugs in Abhängigkeit eines vom Fahrer vorgegebenen Fahrgeschwindigkeitssollwertes eingeregelt wird. Das Ausgangssignal des Fahrgeschwindigkeitsreglers wirkt dabei auf ein Leistungsstellelement des Motors des Fahrzeugs. Der Fahrgeschwindigkeitsregler selbst zeigt je nach Ausführung Proportional-, Integral- und/oder Differenzialverhalten. Zur Verbesserung des dynamischen Verhaltens des Reglers wird bei einem Regelvorgang, der eine Fahrgeschwindigkeitsänderung hervorruft, wie z. B. eine Betätigung der sogenannten Beschleunigungstaste, der Sollwert der Fahrgeschwindigkeitsregelung auf den Wert des bei Betätigen der Taste gemessenen Istgeschwindigkeitswertes zuzüglich eines festen Offsetwertes gesetzt und die Fahrzeuggeschwindigkeit durch rampenförmige Veränderung des Sollwerts durchgeführt. Der Offsetwert wird bei Erreichen der vom Fahrer gewünschten Geschwindigkeit wieder zurückgenommen und die Regelung dann auf der Basis des dann vorliegenden Sollwertes vorgenommen.

Durch die beschriebene Vorgehensweise wird das dynamische Verhalten des Fahrgeschwindigkeitsreglers bei einem fahrgeschwindigkeitserhöhenden Regelvorgang (Beschleunigen, Wiederaufnahme) verbessert. Ein wesentliches Augenmerk ist bei Fahrgeschwindigkeitsreglern jedoch auch auf das komfortable und genaue Einschwingen der Fahrzeuggeschwindigkeit auf den Sollwert nach Abschluß eines solchen dynamischen Regelvorgangs zu richten.

In diesem Zusammenhang bietet die DE-A 37 03 645 (US-Patent 4,884,203) die Lösung an, bei Beendigung des dynamischen Vorgangs (z. B. eines Beschleunigungsvorgangs) einen Rücksprung eines Stellsignals um einen vorgegebenen Betrag vorzunehmen und dann dieses Stellsignal einem zeitlichen Verlauf entsprechend solange abzuregeln, bis die Beschleunigung des Fahrzeugs null ist. Das sprungförmige Verhalten des Stellsignals führt zumindest in einigen Anwendungsfällen zu Komforteinbußen. Ferner zeigt diese Lösung Schwächen hinsichtlich ihres Applikationsaufwandes.

Dokument US 4,835,696 offenbart ein Verfahren- und Vorrichtung zur Steuerung der Geschwindigkeit entsprechend den Merkmalen des Oberbegriffs der Ansprüche 1 und 8.

### Vorteile der Erfindung

Durch die Veränderung des Fahrgeschwindigkeitsollwertes beim Übergang von einem Beschleunigungs- oder Verzögerungsvorgang in die Konstantfahrt in Abhängigkeit der bestehenden Regelabweichung wird ein komfortabler Übergang gestaltet, ohne dass starke Momentenänderungen oder Schwingungen der Fahrzeuggeschwindigkeit vorkommen.

Somit wird in vorteilhafter Weise die Regelgüte des Reglers im gesamten Einsatzbereich verbessert, da beim Übergang von einer dynamischen Phase in eine stationäre Phase die Schwingungsneigung der Fahrgeschwindigkeit deutlich verringert ist.

Besonders vorteilhaft ist es ferner, dass die Korrektur des Sollwertes in Abhängigkeit von der bestehenden Regelabweichung einfach zu applizieren ist und keine aufwendige Bedatung von Kennlinien erfordert. Dadurch läßt sich die Applikationszeit und somit auch die Applikationskosten erheblich verkürzen.

Besonders vorteilhaft ist es, dass die Regelgüte bzw. das komfortable Übergangsverhalten unabhängig von der jeweiligen Fahrsituation ist, beispielsweise unabhängig davon, ob sich das Fahrzeug auf einer Ebene oder an einer Steigung bewegt.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert.

Figur 1 zeigt ein Übersichtsschaltbild einer Steuereinrichtung zur Steuerung der Fahrgeschwindigkeit eines Fahrzeugs.

In Figur 2 ist anhand eines Flußdiagramms eine bevorzugte Ausführungsform zur Gestaltung des Übergangs von einer Beschleunigungsphase in die Konstantfahrt dargestellt. Die Figuren 3 und 4 stellen Zeitdiagramme dar, in welchen das Verhalten wesentlicher Signale beim Übergang von einer Beschleunigungsphase oder von einer Verzögerungsphase in die Konstantfahrt unter Verwendung der dargestellten Vorgehensweise zur Korrektur der Sollgeschwindigkeit gezeigt ist.

### Beschreibung von Ausführungsbeispielen

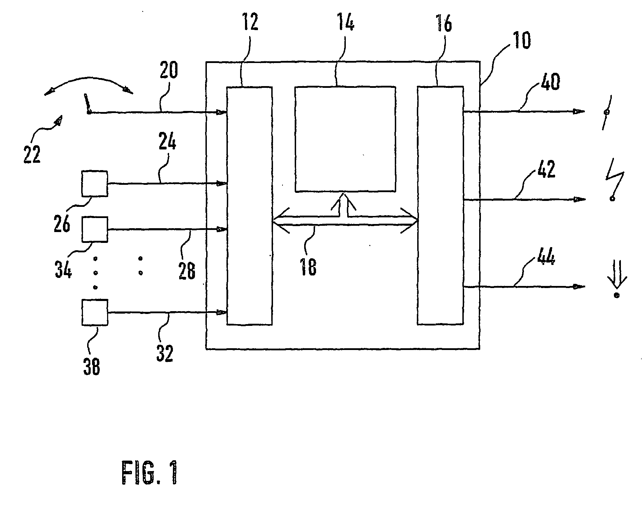

In Figur 1 ist eine Steuereinheit 10 dargestellt, welche im wesentlichen aus Eingangsschaltung 12, Mikrocomputer 14 und Ausgangsschaltung 16 besteht. Diese Elemente sind über ein Kommunikationssystem 18 miteinander zum Datenaustausch verbunden. Die Steuereinheit 10 stellt im bevorzugten Ausführungsbeispiel eine Steuereinheit dar, welche die Antriebsleistung eines Antriebsmotors eines Fahrzeugs steuert. Im Rahmen einer solchen Steuereinheit ist in vielen Anwendungsfällen auch ein Fahrgeschwindigkeitsregler mit umfaßt. Im nachfolgenden wird nur auf den Teil der Steuereinheit 10 abgehoben, der mit dem Fahrgeschwindigkeitsregler direkt in Verbindung steht, während die anderen Funktionen, die Teil der Steuereinheit 10 sind, nicht näher dargestellt werden.

Der Eingangsschaltung 12 der Steuereinheit 10 wird eine erste Eingangsleitung 20 zugeführt, welche die Steuereinheit 10 mit einem vom Fahrer betätigbaren Bedienelement 22 verbindet, mit dem der Fahrer den Funktionsmodus des Fahrgeschwindigkeitsreglers vorgibt bzw. die Sollgeschwindigkeit einstellt. Ferner ist eine Eingangsleitung 24 vorgesehen, die die Steuereinheit 10 mit einer Meßeinrichtung 26 zur Erfassung der Fahrzeuggeschwindigkeit verbindet. In einem anderen Ausführungsbeispiel werden der Steuereinheit 10 anstelle des Fahrgeschwindigkeitssignals ein oder mehrere Radgeschwindigkeitssignale zugeführt, aus denen der Mikrocomputer 14 durch ein in ihm implementiertes Programm die Fahrzeuggeschwindigkeit ermittelt. Ferner sind Eingangsleitungen 28 bis 32 vorgesehen, die die Steuereinheit 10 mit Meßeinrichtungen 34 bis 38 zur Erfassung weiterer Betriebsgrößen des Motors und/oder des Fahrzeugs verbindet. Derartige Betriebsgrößen sind beispielsweise Motordrehzahl, Motortemperatur, Fahrpedalstellung, etc., die im Rahmen anderer Funktionsprogramme zur Steuerung des Antriebsmotors ausgewertet werden.

Über mit der Ausgangsschaltung 16 verbundenen Ausgangsleitungen beeinflußt die Steuereinheit 10 die Leistung des Antriebsmotors und damit die Fahrzeuggeschwindigkeit des Fahrzeugs. Im bevorzugten Ausführungsbeispiel ist der Antriebsmotor ein Verbrennungsmotor, so dass über eine erste Ausgangsleitung 40 die Luftzufuhr, über Ausgangsleitungen 42 der Zündwinkel und über Ausgangsleitungen 44 die Kraftstoffzumessung beeinflußt wird.

Die nachfolgend beschriebene Vorgehensweise zur Fahrgeschwindigkeitsregelung läßt sich nicht nur in Verbindung mit Verbrennungsmotoren, sondern auch in Verbindung mit alternativen Antriebskonzepten, z. B. Elektromotoren, in gleichem Maße einsetzen.

Wie aus dem Stand der Technik bekannt stehen dem Fahrer über das Bedienelement 22 verschiedene Betriebsarten wie Beschleunigen, Verzögern, Wiederaufnahme, Setzen, etc., zur Wahl. Die entsprechende Auswahl wird mittels eines Signals über die Leitung 20 der Steuereinheit 10 zugeführt. Dort werden die Beschleunigungs-, Verzögerungs- und/oder Wiederaufnahmevorgänge beispielsweise über die im eingangs genannten Stand der Technik gezeigte rampenförmige Steuerung des Fahrgeschwindigkeitssollwertes durchgeführt. Der dabei verwendete Regler besteht je nach Ausführungsbeispiel aus einem Regler mit proportionalen Anteil und/oder Integralanteil und/oder mit Differenzialanteil. Bei Beendigen der Betriebsphase Beschleunigen, d. h. bei Verlassen der entsprechenden Bedienelementestellung durch den Fahrer, wird die aktuell vorliegende Geschwindigkeit zunächst als Sollgeschwindigkeit angenommen. Die Fahrzeuggeschwindigkeit schwingt dann über diesem Fahrgeschwindigkeitssollwert hinaus. Die Beschleunigung des Fahrzeugs wird jedoch durch den einsetzenden, die Fahrzeuggeschwindigkeit reduzierenden Regeleingriff verringert, wobei sogar eine negative Beschleunigung des Fahrzeugs einsetzt. Zur Verbesserung des Einschwingverhaltens wird dann, wenn die aktuelle Beschleunigung einen vorgegebenen Schwellenwert unterschreitet, die Sollgeschwindigkeit des Fahrzeuggeschwindigkeitsreglers korrigiert. Der Korrekturwert ist dabei abhängig von der aktuellen Abweichung zwischen dem Soll- und Istgeschwindigkeitswert. Im bevorzugten Ausführungsbeispiel wird auf der Basis der aktuellen Regelabweichung ein Offsetwert gebildet, der auf den bestehenden Sollgeschwindigkeitswert aufaddiert wird. Dabei ist dem bevorzugten Ausführungsbeispiel der Korrekturwert auf einen Maximalwert begrenzt. Ferner wird in einem bevorzugten Ausführungsbeispiel der Beschleunigungsschwellenwert abhängig von Fahrzeuglängsbeschleunigung, z.B. von einem Wert, der bei Beendigung der Beschleunigungsphase vorlag. In einer Ausführung wird er aus diesem Beschleunigungswert multipliziert mit einem applizierbaren Faktor, beispielsweise 0,5, gebildet.

Für den Übergang von Verzögerungsvorgängen in Konstantfahrt wird analog vorgegangen. Dies bedeutet, dass nach Lösen der Verzögerungstaste durch den Fahrer der dann vorliegende Fahrgeschwindigkeitswert als Sollwert vorgegeben wird. Überschreitet die (negative) Istbeschleunigung des Fahrzeugs einen Schwellenwert, so wird dieser Sollgeschwindigkeitswert korrigiert. Auch hier ist vorgesehen, die aktuelle Regelabweichung als Korrekturwert anzunehmen, wobei auch dieser hier auf einen Maximalwert begrenzt wird. Die Sollgeschwindigkeit wird im bevorzugten Ausführungsbeispiel um die aktuelle Regelabweichung vermindert. Auf diese Weise wird ein komfortabler Übergang von der dynamischen Betriebsphase in die Konstantfahrt erzielt. In analoger Weise wird in einer Ausführung der Beschleunigungsschwellenwert abhängig von der Beschleunigung z.B. bei Ende des Verzögerungsvorgangs vorgegeben.

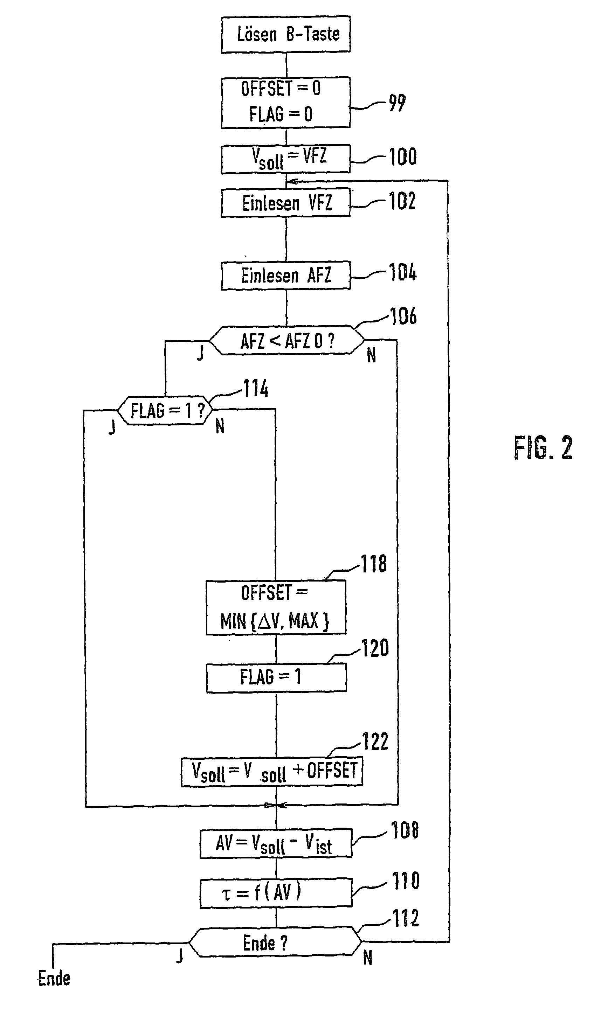

Im bevorzugten Ausführungsbeispiel wird die dargestellte Vorgehensweise mittels eines Computerprogramms realisiert, welches im Microcomputer 14 der Steuereinheit 10 abläuft. Ein Beispiel für ein solches Computerprogramm ist in Figur 2 anhand eines Flußdiagramms dargestellt. Dabei ist lediglich der Übergang zwischen dem Beschleunigungszustand in die Konstantfahrt dargestellt. Der Übergang von der Verzögerungsphase in die Konstantfahrt wird entsprechend realisiert.

Das in Figur 2 dargestellte Programm wird mit Lösen der Beschleunigungstaste (B-Taste) durch den Fahrer eingeleitet. Zunächst wird im ersten Schritt 99 ein Offsetwert OFFSET und eine Marke FLAG auf den Null gesetzt. Dann wird im ersten Schritt 100 der Wert der Sollgeschwindigkeit Vₛₒₗₗ auf den aktuellen Fahrzeuggeschwindigkeitswert VFZ gesetzt. Danach wird im Schritt 102 die Fahrzeuggeschwindigkeit VFZ des Fahrzeugs eingelesen. Nach Schritt 102 wird im Schritt 104 die Fahrzeugbeschleunigung AFZ eingelesen. Diese ist je nach Ausführungsbeispiel gemessen oder aus der Veränderung der Fahrzeuggeschwindigkeit abgeleitet. Danach wird im Schritt 106 überprüft, ob die aktuelle Fahrzeugbeschleunigung AFZ einen vorgegebenen Grenzwert AFZ0 unterschreitet. Der Grenzwert wird dabei entweder fest vorgegeben oder berechnet, beispielsweise aus der bei Beendigung der Beschleunigungsphase vorliegenden, gespeicherten Fahrzeuglängsbeschleunigung vermindert um einen vorgegebenen Faktor. Ist die Beschleunigung nicht unterhalb dieses Grenzwertes, so wird im Schritt 108 die Regelabweichung ΔV als Abweichung zwischen Soll- und Istfahrgeschwindigkeitswert gebildet. Im darauffolgenden Schritt 110 wird das Ausgangssignal τ des Fahrgeschwindigkeitsreglers nach Maßgabe der implementierten Reglerstrategie in Abhängigkeit der Regelabweichung ΔV berechnet. Im bevorzugten Ausführungsbeispiel handelt es sich bei dem Ausgangssignal des Fahrgeschwindigkeitsreglers um einen Drehmomentenwunsch für ein Drehmoment der Antriebseinheit bzw. am Ausgang des Triebstrangs, welches durch entsprechende Steuerung des Antriebsmotors und/oder eines Getriebes eingestellt wird. Danach wird im Schritt 112 überprüft, ob der Betriebsbereich der Konstantfahrt beendet ist, beispielsweise durch erneutes Betätigen der Beschleunigungstaste, durch Ausschalten des Fahrgeschwindigkeitsreglers, durch Betätigen der Verzögerungstaste, etc.. Ist dies nicht der Fall, wird das Programm mit Schritt 102 wiederholt.

Die bis hierher beschriebene Lösung entspricht einer herkömmlichen Fahrgeschwindigkeitsregelung mit der Besonderheit des Vergleichs im Schritt 106.

Zur Verbesserung des Übergangs sind besondere Maßnahmen vorgesehen, wenn die Fahrzeugbeschleunigung den in 106 überprüften Grenzwert unterschreitet. Ist dies nämlich der Fall und wird Schritt 114 erkannt, dass eine Marke FLAG nicht den Wert 1 aufweist, so wird die Regelabweichung ΔV, die der in Schritt 108 ermittelten entspricht, zur Bildung eines Korrekturwerts herangezogen. Im Schritt 118 wird ein Offsetwert OFFSET gebildet als der kleinere Wert aus der Regelabweichung ΔV und einem vorgegebenen Maximalwert MAX. Dieser Maximalwert ist dabei applizierbar und stellt die Obergrenze der Sollwertkorrektur nach Beschleunigung dar. In einem bevorzugten Ausführungsbeispiel beträgt er 5 km/h. In einer Ausführung ist er betriebsgrößenabhängig, z.B. von der Motordrehzahl, der Fahrgeschwindigkeit, der Motorlast, etc..

Der Korrekturwert wird in einem Ausführungsbeispiel aus der aktuellen Regelabweichung abgeleitet, z.B. mittels Korrektur mit einem ggf. betriebsgrößenabhängigen (Motordrehzahl, Motorlast, Fahrertyp, etc.) Faktor.

Nach Schritt 118 wird dem Schritt 120 die Marke FLAG auf den Wert 1 gesetzt. Im nächsten Schritt 122 wird der Sollgeschwindigkeitswert Vₛₒₗₗ unter Berücksichtigung des in Schritt 118 berechneten Offsetwertes korrigiert. Im bevorzugten Ausführungsbeispiel wird der Offsetwert auf den aktuellen Fahrgeschwindigkeitsollwert aufaddiert. Nach Schritt 122 wird die Regelung in den Schritten 108 - 110 nach Maßgabe der in Schritt 122 erfolgten Korrektur der Sollgeschwindigkeit durchgeführt. Die in Schritt 120 gesetzte Marke wird in Schritt 114 überprüft. Weist sie den Wert 0 auf, so erstmalig ein Vorliegen der Beschleunigungsbedingung des Schrittes 106 erkannt. In diesem Fall wird die Sollwertkorrektur vorgenommen. Da die Sollwertkorrektur über den gesamten folgenden stationären Betriebsbereich bestehen bleibt, wird nach einmaliger Korrektur die Marke auf den Wert 1 gesetzt, so dass im Schritt 114 im Falle einer Ja-Antwort direkt die Regelungsschritte 108 - 110 folgen, ohne das eine erneute Korrektur des Sollgeschwindigkeitswertes stattfindet. Hat Schritt 112 ergeben, dass der stationäre Betriebszustand beendet ist, so wird im Schritt 124 der Offsetwert OFFSET sowie die Marke FLAG auf den Wert 0 gesetzt und das Programm bis zum nächsten Lösen der Beschleunigungstaste beendet.

Eine entsprechende Vorgehensweise ergibt sich für den Übergang vom Verzögerungszustand in den stationären Betriebszustand, wobei ein entsprechendes Programm bei Lösen der Verzögerungstaste eingeleitet wird. Hierbei ist zu beachten, dass der Beschleunigungsvergleich dahingehend durchgeführt wird, dass die (negative) aktuelle Beschleunigung des Fahrzeugs einen vorgegebenen (negativen) Schwellenwert überschreiten muß, um zu einer Korrektur des Sollwerts zu führen. Diese besteht darin, dass die Sollgeschwindigkeit um einen bestimmten, regelabweichungsabhängigen Faktor erniedrigt wird. Im bevorzugten Ausführungsbeispiel wird dies durch eine dem Schritt 122 entsprechende Subtraktion des Offsetwertes von der im Übergangspunkt gespeicherten Sollfahrzeuggeschwindigkeit realisiert.

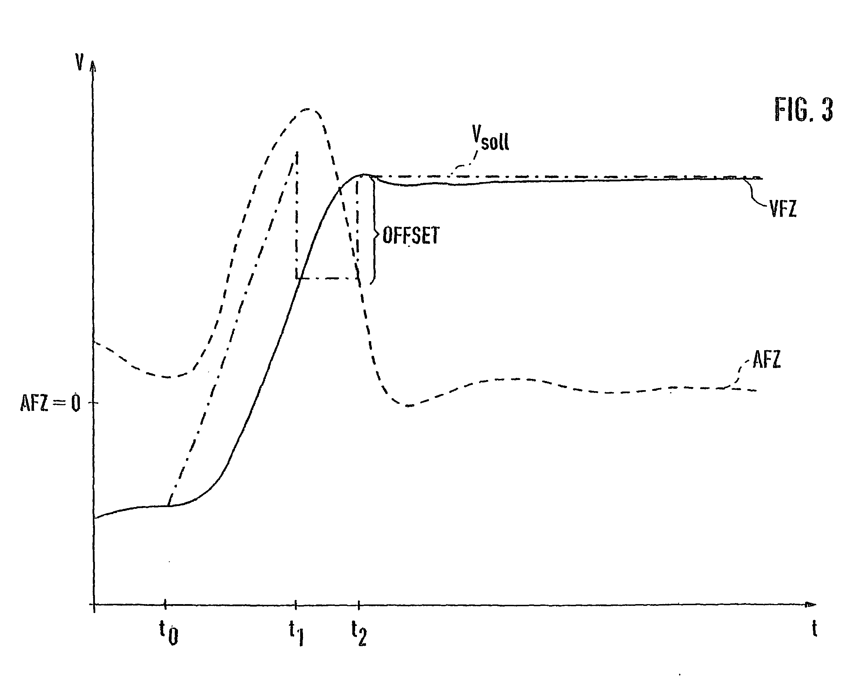

Figur 3 zeigt den zeitlichen Verlauf der Fahrzeugbeschleunigung AFZ, der Fahrzeuggeschwindigkeit VFZ sowie der Zielgeschwindigkeit Vₛₒₗₗ unter Verwendung der oben dargestellten Vorgehensweise in einem Anwendungsfall. Zum Zeitpunkt T0 betätigt der Fahrer die Beschleunigungstaste. Der Sollwert (strichpunktiert) wird gemäß einer vorgegebenen Zeitrampe erhöht. Dies führt zu einer entsprechenden Erhöhung der Beschleunigung und der Fahrzeuggeschwindigkeit, bis zum Zeitpunkt T1 der Fahrer die Beschleunigungstaste löst. Daraufhin wird der Sollwert auf den dann vorliegenden aktuellen Geschwindigkeitswert reduziert, was zu einem geschwindigkeitsund beschleunigungsverringernden Regeleingriff führt. Zum Zeitpunkt T2 unterschreitet die Beschleunigung den vorgegebenen Schwellenwert, so dass dann der Sollwert auf einen Wert gesetzt wird, der aus der dann vorliegenden Regelabweichung gebildet wird. Der Offsetwert ist dabei, sofern er nicht einen Maximalwert überschreitet die in Figur 3 eingezeichnete Abweichung des Istgeschwindigkeitswertes zum Sollgeschwindigkeitswert. Auf diese Weise wird ein komfortables, zufriedenstellendes Übergangsverhalten ohne zu starke Momentensprünge oder Fahrgeschwindigkeitsschwingungen erreicht.

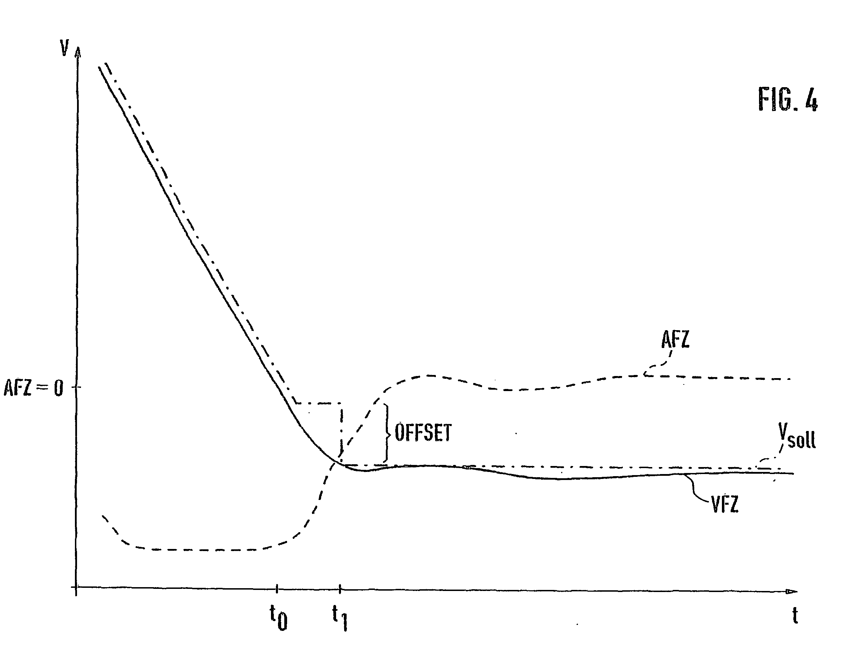

Figur 4 zeigt das entsprechende Verhalten im Zusammenhang mit einem Verzögerungsvorgang. Der Fahrer hat die Verzögerungstaste gedrückt, so dass die Geschwindigkeit gemäß der von der Sollgeschwindigkeit vorgegebenen Zeitrampe reduziert wird. Die Fahrzeugbeschleunigung ist negativ. Zum Zeitpunkt T0 wird die Verzögerungstaste gelöst, so dass die dann vorliegende Istgeschwindigkeit als neue Sollgeschwindigkeit angenommen wird. Dies führt zu einem Regeleingriff, der infolge der negativen Regelabweichung die weitere Reduzierung der Fahrzeuggeschwindigkeit verlangsamt. Damit verbunden ist ein Ansteigen der Fahrzeugbeschleunigung, die im gezeigten Beispiel zum Zeitpunkt T1 den vorgegebenen Schwellenwert überschreitet. In diesem Fall wird der Offsetwert, der aus der dann herrschenden Regelabweichung gebildet wird, vom bestehenden Sollwert abgezogen. Der neue Sollwert gilt ab dem Zeitpunkt T1 wird die folgende Konstantfahrphase. Auf diese Weise wird im gezeigten Anwendungsfall ein komfortables, genaues Einschwingen des Fahrgeschwindigkeitsistwertes beim Übergang vom Verzögerungszustand in den stationären Zustand erreicht.

Die entsprechende Vorgehensweise ist auch in Verbindung mit einem Fahrgeschwindigkeitsbegrenzer einsetzbar, bei welchem im Bereich der Begrenzungsgeschwindigkeit eine Regelung auf den Grenzwert stattfindet.

## Patentansprüche

1. Verfahren zur Steuerung der Geschwindigkeit eines Fahrzeugs beim Übergang von einem dynamischen Betriebszustand des Fahrgeschwindigkeitsreglers in einen stationären, wobei der Antriebsmotor des Fahrzeugs in Abhängigkeit eines Sollwertes für die Fahrzeuggeschwindigkeit und einer ermittelten Istfahrzeuggeschwindigkeit gesteuert wird, wobei die Beschleunigung des Fahrzeugs erfasst wird, **dadurch gekennzeichnet, dass** der Sollwert für die Fahrzeuggeschwindigkeit beim Übergang von einem dynamischen Betriebszustand des Fahrgeschwindigkeitsreglers in einen stationären mit einem von der dann herrschenden Regelabweichung abhängigen Wert geändert wird, wenn die Fahrzeugbeschleunigung einen vorgegebenen Schwellenwert erreicht bzw. über- oder unterschritten hat.

2. Verfahren nach Anspruch 1, **dadurch gekennzeichnet, dass** der dynamische Betriebszustand eine Beschleunigungs- oder Verzögerungsphase ist.

3. Verfahren nach einem der vorhergehenden Ansprüche, **dadurch gekennzeichnet, dass** beim Übergang von dem dynamischen Betriebszustand in den stationären die dann vorliegende Fahrzeuggeschwindigkeit als Sollwert vorgegeben wird, die dann mittels eines von der Regelabweichung abhängigen Korrekturwertes korrigiert wird.

4. Verfahren nach einem der vorhergehenden Ansprüche, **dadurch gekennzeichnet, dass** der Übergang vom dynamischen in den stationären Betriebszustand bei Lösen der entsprechenden Taste bzw. Verlassen der entsprechenden Stellung des Bedienelements durch den Fahrer erfolgt.

5. Verfahren nach einem der vorhergehenden Ansprüche, **dadurch gekennzeichnet, dass** der Korrekturwert ein Offsetwert ist, der im Beschleunigungsfalle dem Sollwert aufaddiert, im Verzögerungsfalle vom Sollwert subtrahiert wird.

6. Verfahren nach einem der vorhergehenden Ansprüche, **dadurch gekennzeichnet, dass** die Korrektur auf einen Maximalwert begrenzt ist.

7. Verfahren nach einem der vorhergehenden Ansprüche, **dadurch gekennzeichnet, dass** der Schwellenwert für die Fahrzeugbeschleunigung aus der Fahrzeugbeschleunigung, die beim Übergang vom dynamischen in den stationären Betriebszustand vorlag, ermittelt wird.

8. Vorrichtung zur Steuerung der Geschwindigkeit eines Fahrzeugs beim Übergang von einem dynamischen Betriebszustand des Fahrgeschwindigkeitsreglers in einen stationären, mit einer Steuereinheit, die einen Sollwert für die Fahrzeuggeschwindigkeit vorgibt und die einen Istwert für die Fahrzeuggeschwindigkeit ermittelt, die einen Regler umfasst, der in Abhängigkeit der aus den beiden Werten gebildeten Regelabweichung einen Antriebsmotor steuert, ferner die Steuereinheit Mittel umfasst, die die Längsbeschleunigung des Fahrzeugs erfassen, **dadurch gekennzeichnet, dass** die Steuereinheit Mittel aufweist, die beim Übergang von einem dynamischen in einen stationären Zustand den Sollwert für die Fahrzeuggeschwindigkeit mit einem von der dann herrschenden Regelabweichung abhängigen Wert ändern, wenn die Beschleunigung des Fahrzeugs einen vorgegebenen Schwellenwert erreicht bzw. unter- oder überschritten hat.

## Claims

1. Method for controlling the velocity of a vehicle at the changeover from a dynamic operating state of the velocity regulator into a steady-state operating state, the drive engine of the vehicle being controlled as a function of a setpoint value for the vehicle velocity and an actual vehicle velocity which is determined, the acceleration of the vehicle being sensed, **characterized in that** the setpoint value for the vehicle velocity is changed at the changeover from a dynamic operating state of the velocity regulator into a steady-state operating state by means of a value which is dependent on the control error which prevails then as the acceleration of the vehicle has reached or exceeded or dropped below a predefined threshold value.

2. Method according to Claim 1, **characterized in that** the dynamic operating state is an acceleration phase or deceleration phase.

3. Method according to one of the preceding claims, **characterized in that** at the changeover from the dynamic operating state into the steady-state operating state the vehicle velocity which occurs then is predefined as a setpoint value and is then corrected by means of a correction value which is dependent on the control error.

4. Method according to one of the preceding claims, **characterized in that** the changeover from the dynamic operating state into the steady-state operating state is carried out when the driver releases the corresponding pushbutton key or leaves the corresponding position of the operator control element.

5. Method according to one of the preceding claims, **characterized in that** the correction value is an offset value which is added to the setpoint value in the case of acceleration and subtracted from the setpoint value in the case of deceleration.

6. Method according to one of the preceding claims, **characterized in that** the correction is limited to a maximum value.

7. Method according to one of the preceding claims, **characterized in that** the threshold value is determined for the acceleration of the vehicle from the acceleration of the vehicle which was present at the changeover from the dynamic operating state into the steady-state operating state.

8. Device for controlling the velocity of a vehicle at the changeover from a dynamic operating state of the velocity regulator into a steady-state operating state, having a control unit which predefines a setpoint value for the vehicle velocity and which determines an actual value for the vehicle velocity and which comprises a regulator which controls a drive motor as a function of the control error which is formed from the two values, in addition the control unit comprises means which sense the longitudinal acceleration of the vehicle, **characterized in that** the control unit has means which change the setpoint value for the vehicle velocity at the changeover from a dynamic state into a steady state by means of a value which is dependent on the control error prevailing then if the acceleration of the vehicle has reached or dropped below or exceeded a predefined threshold value.

## Revendications

1. Procédé pour commander la vitesse d'un véhicule lors du passage d'un état de fonctionnement dynamique à un état de fonctionnement stationnaire du régulateur de vitesse de véhicule, le moteur d'entraînement du véhicule étant commandé en fonction d'une valeur de consigne pour la vitesse du véhicule et d'une vitesse réelle du véhicule mesurée, l'accélération du véhicule étant détectée,
**caractérisé en ce que**
lors du passage d'un état de fonctionnement dynamique du régulateur de vitesse de véhicule à un état stationnaire, la valeur de consigne pour la vitesse du véhicule est modifiée d'une valeur qui dépend de l'écart de réglage alors présent lorsque l'accélération du véhicule a atteint une valeur seuil prédéterminée ou est supérieure ou inférieure à celle-ci.

2. Procédé selon la revendication 1,
**caractérisé en ce que**
l'état de fonctionnement dynamique est une phase d'accélération ou de décélération.

3. Procédé selon l'une quelconque des revendications précédentes,
**caractérisé en ce que**
lors du passage de l'état de fonctionnement dynamique à l'état de fonctionnement stationnaire, la vitesse du véhicule alors présente est prédéterminée comme valeur de consigne, qui est alors corrigée à l'aide d'une valeur de correction qui est fonction de l'écart de réglage.

4. Procédé selon l'une quelconque des revendications précédentes,
**caractérisé en ce que**
le passage de l'état de fonctionnement dynamique à l'état de fonctionnement stationnaire s'effectue lors du relâchement de la touche concernée ou lors de l'abandon de la position concernée de l'élément manipulé par le conducteur.

5. Procédé selon l'une quelconque des revendications précédentes,
**caractérisé en ce que**
la valeur de correction est une valeur offset, qui en cas d'accélération est ajoutée à la valeur de consigne et en cas de décélération soustraite de la valeur de consigne.

6. Procédé selon l'une quelconque des revendications précédentes,
**caractérisé en ce que**
la correction est limitée à une valeur maximale.

7. Procédé selon l'une quelconque des revendications précédentes,
**caractérisé en ce que**
la valeur seuil pour l'accélération du véhicule est déterminée à partir de l'accélération du véhicule présente lors du passage de l'état de fonctionnement dynamique à l'état de fonctionnement stationnaire.

8. Dispositif pour commander la vitesse d'un véhicule lors du passage d'un état de fonctionnement dynamique à un état de fonctionnement stationnaire du régulateur de vitesse de véhicule, comprenant une unité de commande qui prédétermine une valeur de consigne pour la vitesse du véhicule et qui détermine une valeur réelle pour la vitesse du véhicule, comprenant un régulateur, qui en fonction de l'écart de réglage formé à partir des deux valeurs commande un moteur d'entraînement, l'unité de commande comprenant en outre des moyens pour mesurer l'accélération longitudinale du véhicule,
**caractérisé en ce que**
l'unité de commande présente des moyens qui, lors du passage d'un état dynamique à un état stationnaire modifient la valeur de consigne pour la vitesse du véhicule avec une valeur qui est fonction de l'écart de réglage alors présent, lorsque l'accélération du véhicule a atteint une valeur seuil prédéterminée ou est inférieure ou supérieure à celle-ci.
